(19) Europäisches Patentamt

**European Patent Office**

Office européen des brevets

(11) Numéro de publication: **0 178 986**
**B1**

(12) **FASCICULE DE BREVET EUROPEEN**

(51) Int. Cl.⁴: **C 01 B 25/41**

(45) Date de publication du fascicule du brevet:
**20.04.88**

(21) Numéro de dépôt: **85401956.9**

(22) Date de dépôt: **08.10.85**

(54) Tripolyphosphate de sodium à vitesse d'hydratation élevée, son procédé de préparation et son application en détergence.

(30) Priorité: **15.10.84 FR 8415743**

(43) Date de publication de la demande:
**23.04.86 Bulletin 86/17**

(45) Mention de la délivrance du brevet:
**20.04.88 Bulletin 88/16**

(84) Etats contractants désignés:
**AT BE CH DE FR GB IT LI LU NL SE**

(56) Documents cités:
**EP - A - 0 101 347**
**FR - A - 1 559 307**
**US - A - 3 054 656**
**US - A - 3 469 938**

(73) Titulaire: **RHONE-POULENC CHIMIE, 25, quai Paul
Doumer, F-92408 Courbevoie Cédex (FR)**

(72) Inventeur: **Joubert, Daniel, Route du Stade Reyrieux,
F-01600 Trevoux (FR)**

(74) Mandataire: **Cazes, Jean-Marie et al, RHONE-POULENC
INTERSERVICES Service Brevets Chimie Centre de
Recherches de Saint-Fons B.P. 62, F-69192 Saint-Fons
Cédex (FR)**

## Description

La présente invention concerne un tripolyphosphate de sodium (TPP) à vitesse d'hydratation élevée, son procédé de préparation et son application en détergence pour la préparation de compositions ou formules lessivielles, en particulier pour des formules liquides.

On sait que dans la préparation des lessives, on part d'un TPP anhydre que l'on transforme en TPP hexahydraté dans un milieu lessiviel aqueux comprenant les autres constituants de la lessive.

La bouillie ou suspension ainsi obtenue peut constituer elle-même une lessive liquide ou bien elle peut être atomisée pour conduire à une lessive en poudre.

Compte-tenu de ces procédés de préparation, on comprend que l'on cherche un TPP puisse s'hydrater aussi vite et aussi quantitativement que possible. Par ailleurs, il est aussi nécessaire d'obtenir des bouillies dont les viscosités soient suffisamment faibles pour permettre leur pompage ou leur pulvérisation dans des conditions industrielles.

Or, on sait par ailleurs que le TPP anhydre peut être obtenu sous des formes cristallines distinctes, phase I ou phase II, dont les comportements à l'hydratation sont différents. C'est ainsi que la phase I s'hydrate très vite mais qu'elle a tendance à donner lieu à des prises en masse, à la formation de grumeaux qui posent des problèmes dans une utilisation industrielle. La phase II donne par contre des bouillies homogènes mais malheureusement, la vitesse d'hydratation est trop lente.

De nombreux procédés ont été proposés pour préparer des qualités de TPP présentant en particulier une bonne vitesse d'hydratation.

On connaît notamment un procédé décrit dans EP-A-0 101 347. Selon ce procédé, on prépare un TPP par passage d'une solution d'orthophosphate dans un réacteur dans lequel cette solution est dispersée dans une phase gazeuse en écoulement puits-tourbillon. Le TPP ainsi obtenu présente de bonnes qualités. Cependant il nécessite un matériel spécifique différent de celui utilisé habituellement dans l'industrie du TPP.

Par ailleurs, le besoin se fait sentir d'un TPP possédant une vitesse d'hydratation encore plus élevée et des viscosités en bouillie encore plus basses que celles déjà obtenues avec ce produit.

La présente invention a pour objet un TPP qui puisse être préparé avec un matériel classique et qui réunisse au maximum les avantages de la phase I, donc une vitesse d'hydratation élevée, à ceux de la phase II, c'est-à-dire l'obtention de bouillies homogènes à basse visscosité et ceci sans les inconvénients de ces phases respectives. Le TPP selon l'invention possède ces qualités recherchées et il présente les caractéristiques suivantes:

– une teneur en phase I d'au moins 50%;
– une répartition homogène de la phase I;
– une granulométrie telle que le diamètre moyen RRB soit compris entre 130 et 250 µm et que les proportions maximales en masse de produit à particules de diamètres supérieurs à 630 µm et de diamètres inférieurs à 25 µm soient respectivement de 5% environ et de 20% environ;

– une teneur en eau comprise entre 0,4 et 4%, cette eau étant essentiellement présente sous forme de cristaux de tripolyphosphate de sodium hexahydraté;
– une répartition homogène des cristaux précités dans chaque fraction granulométrique du produit.

Le TPP tel que défini ci-dessus présente des propriétés physicochimiques tout à fait intéressantes, notamment pour la préparation de bouillies ou slurries de détergents pour atomisation ou pour la préparation de compositions détergentes liquides versables contenant le TPP sous forme hexahydraté et à l'état de suspension micro-cristalline.

Le TPP selon l'invention est préparé suivant un procédé comportant les étapes suivantes:
– on part d'un tripolyphosphate résultant d'une polycondensation unique et à température telle que l'on obtienne une teneur en phase I d'au moins 50%;
– on effectue un broyage primaire grossier de ce tripolyphosphate;
– on préhydrate ce tripolyphosphate broyé en y pulvérisant une suspension aqueuse de tripolyphosphate hexahydraté, de manière que la teneur en eau du tripolyphosphate préhydraté soit comprise entre environ 0,4 et environ 4%;
– on effectue un broyage secondaire du tripolyphosphate préhydraté de manière à obtenir une granulométrie telle que le diamètre moyen RRB soit compris entre 130 et 250 µm et que les proportions maximales de produit à particules de diamètres supérieurs à 630 µm et particules de diamètres inférieurs à 25 µm soient respectivement de 5% environ et de 20% environ.

D'autres caractéristiques et avantages de l'invention seront mieux compris à la lecture de la description qui va suivre et d'exemples de mise en œuvre concrets mais non limitatifs.

Le TPP selon l'invention doit ses propriétés particulières à un ensemble de caractéristiques qui vont être décrites plus en détail ci-dessous.

Tout d'abord le TPP de l'invention présente une teneur en phase I définie par le rapport Phase I/Phase I + Phase II d'au moins 50%.

Généralement, les produits qui rentrent dans le cadre de l'invention présentent une teneur en phase I d'au moins 70%.

Une autre caractéristique importante des TPP selon l'invention réside dans la répartition homogène de cette phase I. On entend par là que chaque grain de TPP contient la même quantité de phase I que l'ensemble du produit. En d'autres termes, il ne s'agit en aucun cas d'un mélange de TPP ayant des teneurs en phase I différentes. Ceci signifie aussi que le TPP de l'invention résulte d'une polycondensation unique à une température déterminée pour obtenir la teneur en phase I voulue. Des exemples de tels TPP sont ceux obtenus par polycondensation dans un seul four par exemple du type tambour tournant. En ce qui concerne la préparation des TPP il est à noter que ceux utilisables pour l'invention sont ceux résultant d'une polycondensation en four, ceux obtenus par atomisation ne convenant pas.

La granulométrie est aussi une caractéristique importante du TPP selon l'invention. Cette granulométrie doit être telle que le diamètre moyen RRB

(Rosin Ramler Benett) soit compris entre environ 130 µm et 250 µm. Par ailleurs, les particules d'un diamètre supérieur à 630 µm doivent constituer au plus 5% environ en masse du produit et celles de diamètre inférieur à 20 µm au plus 20% environ en masse. De préférence, ces maxima sont de 2,5% pour les particules de diamètre supérieur à 630 µm et de 10% pour celles de diamètre inférieure à 20 µm.

D'une manière générale, le diamètre moyen est plus gros et la répartition granulométrique est plus étalée que pour les TPP pour slurry et compositions liquides rencontrés habituellement sur le marché.

Cette granulométrie étalée contribue à la dissolution rapide du TPP sans prise en masse et à une recristallisation rapide, sans formation de nodules ou agrégats, conduisant à un slurry de viscosité satisfaisante.

Selon une autre caractéristique essentielle, le TPP de l'invention est préhydraté. En ce qui concerne cette préhydratation, trois points doivent être pris en compte.

Tout d'abord, la teneur en eau de TPP préhydraté est comprise entre environ 0,4 et environ 4% en poids, et est de préférence d'au moins 1,7%, cette quantité d'eau étant celle mesurée par la perte en poids à 550°C.

Ensuite, cette eau est essentiellement présente sous forme de TPP hexahydraté.

Cette caractéristique est obtenue par pulvérisation d'une suspension aqueuse de TPP hexahydraté sur le TPP anhydre dans des conditions qui seront décrites plus loin. Le TPP ainsi traité contiendra des cristaux d'hexahydrate.

Enfin, les cristaux d'hexahydrate sont répartis d'une manière homogène à l'intérieur du TPP de l'invention. En d'autres termes, chaque population granulométrique contient la même proportion de cristaux d'hexahydrate. Ceci peut se mesurer par la perte en eau à 550°C qui doit être sensiblement identique, quelle que soit la fraction granulométrique considérée. Ceci se traduit aussi par le fait que la perte en eau pour chaque fraction granulométrique est du même ordre de grandeur que celle déterminée sur le produit pris dans son ensemble.

Pour illustrer cette caractéristique on donne ci-dessous les pertes en eau pour différentes fractions granulométriques de TPP selon l'invention ou non. Les numéros d'essais figurant dans les tableaux renvoient aux exemples décrits par la suite.

| Fraction granulométrique mm | TPP selon l'invention Perte 550°C % Essai N° 6 | TPP art antérieur Perte 550°C % |
|---|---|---|
| 0 - 0,025 | 3,21 | 3,18 |
| 0,025 - 0,050 | 3,21 | 2,97 |
| 0,050 - 0,100 | 3,59 | 2,72 |
| 0,100 - 0,160 | 3,82 | 2,56 |
| 0,160 - 0,200 | 4,39 | 3,35 |
| 0,200 - 0,250 | 4,45 | 6,72 |
| 0,250 - 0,315 | 4,03 | 9,13 |
| 0,315 - 0,400 | 3,64 | 10,14 |
| 0,400 | 2,92 | 13,78 |
| Perte du produit dans son ensemble à 550°C | 3,44% | 4,43% |

| Fraction granulométrique mm | TPP selon l'invention Perte à 550°C Essai N° 11 |
|---|---|
| 0 - 0,050 | 2,1 % |
| > 0,630 | 2,48% |
| Ensemble du produit | 2,20% |

Les germes d'hexahydrate ainsi présents sur le TPP de l'invention vont aussi favoriser la recristallisation du produit, notamment la vitesse d'apparition des cristaux lors de la préparation ultérieure des slurries.

En ce qui concerne d'autres caractéristiques du TPP selon l'invention, on peut noter que le niveau de purification à atteindre n'est pas critique. On pourra ainsi se contenter de produits présentant des teneurs résiduelles en ions calcium et magnésium allant jusqu'à 300 ppm environ pour chaque cation. Ceci constitue donc un avantage supplémentaire sur le plan économique pour le produit de l'invention.

On notera aussi que le TPP de l'invention présentera de préférence une teneur en TPP «vrai» c'est-à-dire excluant les autres formes phosphatées d'au moins 93%.

Enfin, le TPP selon l'invention présente une densité apparente d'au moins 0,8 et de préférence comprise entre 0,9 et 1,2. Les TPP de densité apparente inférieures ne conviennent pas, notamment ceux obtenus par atomisation.

Le procédé de préparation du TPP selon l'invention va maintenant être décrit plus précisément.

Comme on l'a vu plus haut, on part d'un TPP résultant d'une polycondensation unique, à une température fixée de manière que le TPP présente au moins 50% de phase I.

On effectue ensuite un broyage primaire grossier de ce TPP par tout moyen connu.

Généralement ce broyage primaire est conduit de manière à obtenir un produit présentant un diamètre moyen RRB compris entre 600 µm et 1500 µm, plus particulièrement entre 600 et 800 µm, et pour lequel les particules d'un diamètre supérieur à 1 mm constituent au plus entre 20 et 40% en masse du produit, celles de diamètre supérieur à 2 mm au plus 5 à 15% en masse et celles de diamètre inférieur à 100 µm au plus 5 à 20% en masse.

On préhydrate ensuite le TPP broyé par pulvérisation sur celui-ci d'une suspension aqueuse de TPP hexahydraté.

Cette suspension est préparée par addition à de l'eau d'une quantité suffisante de TPP pour être en sursaturation. De préférence, on prépare une suspension à une teneur en TPP allant de 30 à 35% de TPP. Pour préparer ladite suspension on utilise de préférence un TPP présentant la même caractéristique d'homogénéité de répartition de la phase I que celle qui a été décrite plus haut pour le TPP de l'invention.

Sa teneur en phase I doit être aussi d'au moins 50%.

La pulvérisation se fait selon tout moyen convenable. Généralement, la quantité de suspension pulvé-

risée est de 0,6 à 6% en poids par rapport au TPP anhydre.

A la suite de la pulvérisation, le TPP préhydraté est soumis à un broyage secondaire qui l'amène à la granulométrie du produit fini, définie plus haut par le diamètre moyen RRB et les refus maximaux. C'est ce broyage secondaire qui permet d'atteindre la répartition homogène des cristaux de TPP hexahydraté sur chaque fraction de population granulométrique.

Le TPP ainsi produit peut être utilisé d'une manière connue en soi et avec tous les autres composés habituels et connus dans la préparation de bouillies ou slurries d'atomisation pour la fabrication de lessives en poudre.

Dans la préparation de ces slurries, le TPP selon l'invention présente un certain nombre d'avantages qui apparaissent dans les différentes propriétés suivantes.

1) La cinétique de transformation du TPP anhydre en TPP hexahydraté. Dans les conditions du test qui seront définies plus loin, la vitesse de transformation varie de 8 à 10 mn pour généralement 20 à 50 mn pour les produits connus.

2) Le taux de transformation du TPP anhydre en TPP hexahydraté à un temps constant ou au palier de transformation. Ces taux sont plus élevés pour les produits de l'invention, au moins 98% contre 95 à 60% pour les TPP courants.

3) La consistence du slurry. Sa viscosité est plus faible pour le TPP de l'invention.

4) Les propriétés rhéologiques du slurry au pompage lors de la vidange du réacteur-malaxeur ou crutcher. Ces propriétés sont aussi améliorées: 0,6 à 0,8 Pa·s (6 à 8 poises) sous un gradient de vitesse de 300 sec$^{-1}$ à 80°C contre 0,8 à 1,5 Pa·s (8 à 15 poises) pour les TPP courants de l'art antérieur.

5) Les propriétés rhéologiques du slurry lors du broyage colloïdal. On observe un abaissement de 0,8 à 0,2 Pa·s (8 à 2 poises) contre un abaissement de 0,6 à 0,3 Pa·s (6 à 3 poises) pour les TPP habituels.

6) Les propriétés rhéologiques du slurry lors de la pulvérisation dans la tour d'atomisation. La viscosité est de 1,2 à 1,4 Pa·s (12 à 14 poises) sous 1,5 · 10$^5$ sec$^{-1}$ contre 1,4 à 2,0 Pa·s (14 à 20 poises) pour les TPP courants.

La propriété 1 permet des cadences élevées de travail (préparation de slurry en continu) dans de bonnes conditions. Les propriétés 3 à 6 permettent de travailler aussi dans de bonnes conditions à extrait sec de slurry plus élevée de 2 à 5%. La propriété 2 en combinaison avec les propriétés 3 à 6 permet d'obtenir après séchage un taux de reversion ou hydrolyse minimal du TPP compris entre 5 et 10% de pyrophosphate par rapport au TPP introduit dans la composition.

Outre l'utilisation qui vient d'être décrite du TPP de l'invention pour la préparation de slurries d'atomisation, celui-ci peut être aussi employé dans la fabrication de compositions détergentes liquides à base de TPP hexahydraté maintenu en suspension microcristalline.

Dans cette utilisation, le TPP de l'invention permet d'obtenir une composition liquide stable, sans seuil d'écoulement pouvant contenir jusqu'à 30% de TPP, exprimée en anhydre, contre 20 à 25% pour des TPP commercialisés courants.

Les compositions liquides à base d'un TPP du type de l'invention peuvent contenir jusqu'à 20-25% d'agent de surface.

Des compositions liquides peuvent être préparées selon le procédé préféré ci-dessous.

Dans un premier temps, on mélange un TPP selon l'invention avec de l'eau pour former une suspension de TPP hexahydraté. Il est à noter que cette suspension peut avantageusement être faite dans un milieu hydroalcoolique, en partant d'un mélange d'eau, d'alcool ou de polyol. Dans ce cas, on améliore la proportion de TPP cristallisé par rapport au TPP dissous.

Dans un deuxième temps, on ajoute à la suspension ainsi préparée une préparation concentrée d'ingrédients actifs. Par ingrédients actifs, on entend ici tous les composants connus compatibles avec la formulation correspondante et susceptibles de lui conférer des propriétés améliorées ou intéressantes, tels que par exemple des agents de surface, les séquestrants, les agents de blanchiment, les agents anti-redéposition, les agents d'avivage optique, les additifs biologiques, les hydrotropes, les solvants, les anti-mousses.

Des exemples vont maintenant être donnés pour illustrer d'une part le comportement en slurry du TPP selon l'invention et d'autre part son comportement dans la préparation de formulations détergentes liquides.

A - *EXEMPLE 1 - Comportement en slurry*

*Appareillage*

L'appareillage qui va être décrit ci-dessous permet de simuler les opérations de mélange, puis de pompage et enfin de pulvérisation que doit subir un slurry de lessivier. Ces opérations se décomposent en deux parties principales, à savoir le mélange des constituants et l'hydratation recristallisation du TPP d'une part, la manutention du slurry fini, son pompage, sa pulvérisation d'autre part.

En ce qui concerne la première partie, on dispose pour la préparation du slurry d'un réacteur ou «crutcher» à double enveloppe. Celle-ci peut être soit parcourue par un fluide caloporteur, soit vidangée de son contenu et fonctionner comme une double paroi isolante.

Le réacteur est muni d'un agitateur à hélice complété par quatre contre-pales fixées sur le réacteur. L'agitation est assurée par un moteur à courant continu et à vitesse variable. Un servo-moteur associé à un tachymètre permet de maintenir la vitesse constante, quelle que soit la valeur du couple résistant.

Pour ce qui est de la seconde partie, on dispose d'une pompe branchée sur une vanne de fond du réacteur et débitant dans un tube inox calibré de longueur 100,9 mm et de diamètre 14 mm. Un débimètre est placé a l'entrée du tube, deux capteurs de pression sont disposés respectivement à chacune de ses extrémités pour permettre l'enregistrement de la perte de charge. Un retour R relie le tube au réacteur.

Par ailleurs, montées en parallèle avec le retour et reliées au tube se trouvent deux buses ou capillaires $C_1$ et $C_2$ de longueur respective 2 et 4 mm de diamètre 2 mm.

On peut donc extraire par le fond du réacteur le slurry préparé, le faire débiter par la pompe dans le tube calibré et le renvoyer dans le crutcher par le retour R ou par l'un des capillaires $C_1$ et $C_2$.

*Mesures*

*1ère partie*

Le système de mesures et d'enregistrement permet d'acquérir les données suivantes au niveau du réacteur: température du liquide caloporteur dans la double enveloppe, température de la masse dans le réacteur, niveau du couple résistant sur le moteur d'agitateur.

Par étallonnage on évalue la valeur en eau de l'ensemble de l'appareillage et les fuites thermiques correspondants.

On peut en déduire les divers enseignements suivants:

*Calorimétrie:* on trace la courbe corrigée donnant le dégagement de chaleur dû à l'hydratation/recristallisation. On obtient ainsi la cinétique d'hydratation (pente de la courbe), le temps total d'hydratation (temps pour arriver au palier), le taux d'hydratation (par comparaison avec la quantité de Kcal théoriquement dégageable en fonction de l'analyse pondérale du TPP testé).

On peut aussi connaître le taux d'hydratation et de recristallisation du TPP à un temps de malaxage donné constant, par exemple après 12 minutes, ce qui correspond à la durée moyenne d'une opération industrielle.

*Consistance du milieu:* grâce à l'enregistrement de l'ampérage consommé par le moteur électrique à vitesse constante, on a une première évaluation de la consistance du milieu.

On peut aussi relever l'ampérage consommé pour un temps constant de 12 minutes.

*2ème partie*

Dans cette deuxième partie, les mesures de pression différentielle, de température et de débit du slurry permettent d'atteindre les caractéristiques rhéologiques de la suspension. On pompe le slurry à travers le tube calibré en faisant varier le débit. Les mesures faites sur le tube permettent de connaître le comportement au pompage du slurry à la sortie du réacteur.

On fait ensuite passer le slurry dans les capillaires $C_1$ et $C_2$. Les mesures faites sur le premier, compte-tenu de ces dimensions et des débits, donnent des indications sur le comportement du slurry dans un broyeur colloïdal; les mesures faites sur le second donnent des renseignements sur le comportement du même slurry lors de la pulvérisation.

Après chaque passage sur les capillaires $C_1$ et $C_2$, on mesure à nouveau la viscosité du slurry à l'aide du tube calibré.

*Composition et préparation du slurry*

La composition du slurry est la suivante:

| | |
|---|---|
| D.D.B. sulfonate de Na (Dodecylbenzènesulfonate de sodium) | 9,0% |
| Stéarate de Na | 1,5% |
| Silicate de Na | 2,5% |
| Sulfate de Ne | 11,0% |
| T.P.P. | 31,0% |
| Eau | 45,0% |

On prépare de la manière suivante:

On mélange dans le réacteur l'acide sulfonique et l'acide stéarique:

| | | |
|---|---|---|
| (1) | acide sulfonique: | 1348 g |
| (2) | acide stéarique: | 223 g |

On chauffe vers 50°-55°C (fusion de l'acide stéarique) puis on ajoute:

| | | |
|---|---|---|
| (3) | eau: | 1000 g |

La neutralisation des acides est effectuée à froid (vers 40°C) par une solution de soude.

| | | |
|---|---|---|
| (4) | NaOH en pastilles: | 210 g |
| (5) | Eau: | 1500 g |

Après neutralisation, on ajoute:

| | |
|---|---|
| Eau: | 2000 g |

puis on porte la température du mélange vers 60°C, avant l'ajout d'une solution de disilicate de Na.

| | | |
|---|---|---|
| (6) | Disilicate de Na: | 800 g |
| (7) | Eau: | 1000 g |

Après la solution de disilicate, on ajoute

| | | |
|---|---|---|
| (8) | Eau: | 1200 g (eau rinçage) |

Quand la température de réacteur atteint 70°C, on ajoute:

| | | |
|---|---|---|
| (9) | Sulfate de Na: | 1760 g |

La température du mélange est alors portée à 80°C et on régule le réacteur à cette température pendant 15 min.

Avant l'ajout du:

| | | |
|---|---|---|
| (10) | T.P.P.: | 4960 g |

on abandonne la régulation du réacteur, c'est-à-dire le liquide caloporteur ne circule plus dans la double enveloppe du réacteur. On augmente progressivement la vitesse d'agitation du réacteur à 280 tr/min pendant l'introduction du TPP qui ne dure que 15 à 40 sec. On maintient à cette vitesse pendant 2 min, puis on réduit à 200 tr/min, vitesse qui est maintenue constante pendant la durée de la réaction d'hydratation. Dès l'introduction du TPP, on enregistre d'une part l'évolution de la force d'agitation (couple), d'autre part l'élévation de la température du réacteur (la réaction d'hydratation est exothermique).

*Résultats*

Les opérations décrites ci-dessus ont été réalisées avec plusieurs TPP. Les résultats sont rassemblés dans les tableaux 1 et 2 ci-dessous.

Dans la ligne 6 du tableau I, le non indique que la préhydratation s'est faite par de l'eau et non par une suspension aqueuse de TPP.

Dans le tableau 2, le taux d'hydratation de la ligne 2 est calculé au palier de la courbe calorimétrique. La consistance du milieu à la ligne 4 est celle au palier de la courbe calorimétrique.

Enfin, les lignes 6-2 et 6-3 correspondent respectivement aux mesures faites sur le tube calibré après passage sur la capillaire $C_1$ et aux mesures faites sur la capillaire $C_2$ pour de gradients de vitesse T indiqués dans le tableau.

Les essais 1, 6 et 11 correspondent à des TPP selon l'invention.

Les essais 2 et 3 sont faits avec des produits qui n'ont pas subi de préhydratation selon l'invention, c'est-à-dire par une suspension aqueuse de TPP. Ces produits ne présentent pas non plus l'homogénéité de répartition des cristaux d'hexahydrate caractéristique des produits selon l'invention. Dans les deux cas, les vitesses d'hydratation sont plus lentes et les taux d'hydratation insuffisants. Le slurry dans le réacteur est plus visqueux.

Les essais 4, 5 et 7 concernent des produits présentant les mêmes différences par rapport à ceux de l'invention que ceux des essais 2 et 3 avec en outre une absence d'homogénéité de la phase I et pour les essais 5 et 7 une granulométrie insuffisante. On observe des vitesses et des taux d'hydratation insuffisants pour des propriétés rhéologiques du slurry moins bonnes que pour les produits de l'invention.

Le produit de l'essai 8 ne présente pas une granulométrie convenable. Malgré sa faible teneur en phase I et sa pureté élevée en cations, il donne un temps d'hydratation élevé. Le produit de essai 9 est tout à fait insatisfaisant. Il n'a pas subi de préhydratation.

Le produit de l'essai 10 est obtenu selon le procédé de la EP-A-0 101 347. Il donne lieu à un slurry de consistance plus élevée. On doit noter aussi qu'après le broyage colloïdal la viscosité du milieu est beaucoup plus élevée que pour les produits selon l'invention.

B - *EXEMPLE 2 - Comportement dans la préparation de formulations détergentes liquides*

*Appareillage*

On utilise un réacteur en verre de 1 litre, cylindrique, muni de contre-pales et d'un agitateur à axe vertical dans lequel on prépare une formulation détergente du type décrit plus haut.

Cet appareil est équipé d'une sonde de température reliée à un enregistreur et le moteur qui entraîne l'agitateur est un moteur à courant continu et à vitesse constante régulée automatiquement.

Avec un tel moteur, il est possible de mesurer l'intensité consommée et de l'enregistrer.

La variation obtenue est proportionnelle à la consistance du milieu et permet donc, en parallèle avec l'évolution de température, de suivre le phénomène de dissolution et de recristallisation du TPP anhydre en TPP $6H_2O$.

*Mode opératoire*

On met en œuvre un mélange de composition suivante:

| | |
|---|---|
| Eau permutée | 45% |
| Glycérol | 10% |
| TPP anhydre | 45% |

On commence l'opération à température ambiante en introduisant d'abord dans le réacteur l'eau, puis le glycérol et finalement le TPP. L'agitation est maintenue 20 minutes après l'introduction du TPP.

*Mesures et résultats*

On note l'ampérage consommé pour agiter le mélange à vitesse constante = 300 tr/min, ceci après 10 minutes et après 20 minutes de mélange.

A la fin de l'opération, on note en outre l'aspect du mélange obtenu, la présence ou l'absence de grumeaux, sa stabilité ainsi que les éventuelles prises en masse de l'ensemble, toutes choses qui varieront en fonction de la nature du TPP utilisé.

Les résultats sont reportés sur les tableaux 3 et 4.

Les essais 12 et 15 sont fait avec des produits selon l'invention et les mêmes que ceux des essais 1 et 6, les essais 13 et 14 avec les mêmes produits que ceux des essais 3 et 4.

L'essai 16 est fait avec un produit de granulométrie ne convenant pas. Il en est de même pour les essais 17 à 20, les produits ne présentant pas en outre une homogénéité de répartition des cristaux d'hexahydrate. L'essai 21 réalisé avec le produit de l'essai 10 donne lieu à une suspension très épaisse.

C - *EXEMPLE 3*

Cet exemple illustre un type de composition détergente liquide que l'on peut mettre en œuvre avec un TPP selon l'invention. Les teneurs sont données en % en masse:

| | |
|---|---|
| Eau | 27,4 |
| Glycérol (polyol) | 5 |
| TPP | 28 |
| Alkylbenzène sulfonate en $C_{12}$ (50% dans l'eau) | 32 |
| Alcool $C_{12}60E$ (alcool linéaire en $C_{12}$ ethoxylé avec 6 moles d'oxyde d'ethylène) | 4 |
| Emulsion silicone | 0,4 |
| Hydrotrope (toluène sulfonate) | 1,0 |
| Alcool (isopropanol) | 2 |
| Azurants | 0,2 |

Bien entendu, l'invention n'est nullement limitée aux modes de réalisation décrits qui n'ont été donnés qu'à titre d'exemples. En particulier, elle comprend tous les moyens décrits ainsi que leurs combinaisons si celles-ci sont mises en œuvre dans le cadre de la protection comme revendiquée.

TABLEAU 1

| ESSAIS<br>Caractéristiques des produits | 1 | 2 | 3 | 4 | 5 | 6 | 7 | 8 | 9 | 10 | 11 |
|---|---|---|---|---|---|---|---|---|---|---|---|
| 1. Teneur en TPP vrai | 95 | 94 | 93 | 94 | 93 | 93 | 85 | 96 | 93 | 93 | 93 |
| 2. Densité apparente | 0,95 | 0,95 | 0,95 | 0,95 | 1,00 | 0,95 | 0,95 | 0,88 | 0,92 | 0,45 | 0,90 |
| 3. Teneur en phase 1 | 70 | 50 | < 5 | 50 | 30 | 70 | 20 | < 5 | 70 | 87 | 90 |
| 4. Homogénéité de répartition de la phase 1 | oui | oui | oui | non | non | oui | non | oui | oui | oui | oui |
| 5. Granulométrie<br>Ø moyen (Rosin Ramler Benett) µm | 180 | 150 | 160 | 170 | 65 | 130 | 90 | 110 | 85 | 210 | 150 |
| % en masse, des particules > 630 µm | 2,4 | 2,0 | 3,0 | 3,0 | 0% | 1,5% | 0,5% | 1% | 0,5% | 0,5% | 1,5% |
| % en masse, particules < 25 µm | 5,0 | 5,0 | 10,0 | 7,0 | 25,0% | 8% | 2,5% | 0% | 5% | 1% | 8% |
| 6. Préhydratation par suspension aqueuse de TPP | oui | non | non | non | non | oui | non | non | non | non | oui |
| Quantité d'eau (% $H_2O$ par perte à 550°C) | 1,70 | 1,95 | 2,04 | 1,90 | 1,82 | 3,8% | 4,0% | 1,1% | 0,2 | 1,5 | 2,20% |
| 7. Homogénéité de répartition des cristaux d'hexahydrate dans chaque population granulométrique | oui | non | non | non | non | oui | non | oui | * | non | oui |
| 8. Pureté (cations étrangers)<br>$Ca^{++}$ ppm | 300 | 290 | 280 | 290 | 300 | 300 | 55 | 60 | 360 | 150 | 250 |
| $mg^{++}$ ppm | 290 | 250 | 250 | 270 | 270 | 180 | 15 | 20 | 200 | 30 | 150 |

* produit non préhydraté

TABLEAU 2

Comportement en slurry d'atomisation

| ESSAIS | 1 | 2 | 3 | 4 | 5 | 6 | 7 | 8 | 9 | 10 | 11 |
|---|---|---|---|---|---|---|---|---|---|---|---|
| 1. Temps d'hydratation (TPPA TPP 6$H_2O$) mn | 9 | 24 | 108 | 36 | 55 | 12 | 18 | 33 | 67 | 13 | 9 |
| 2. Taux d'hydratation | 98,5% | 92,5% | 63,7% | 79,8% | 75% | 96% | 90% | 90% | 88% | 100% | 99% |
| 3. Taux d'hydratation à t = $c^{te}$ = 12 mn | 98,5% | 79% | 10,5% | 57,0% | 56% | 96% | 87% | 68% | 60% | 83% | 99% |
| 4. Consistance du milieu (ampérage) | 5,8 A | 6,6 A | 9,4 A | 7,5 A | 9,5 A | 6,0 A | 7,5 A | 10,2 A | — | 7,4 | 7 |
| 5. Consistance du milieu à t = $c^{te}$ = 12 mn | 6A | 4,6 A | 4,4 A | 4,9 A | 7,0 A | 6,0 A | 7,0 A | 8,0 | 8 A | 7,4 | — |
| 6. Propriété rhéologique au pompage<br>6.1 Viscosité «sortie crutcher» sous = 300 $sec^{-1}$ exprimé en Pa·s (10 poise) | 0,72 | 0,64 | 2,7 | 0,78 | 1,0 | 0,80 | 0,72 | 0,72 | | 0,70 | 0,78 |
| 6.2 Viscosité après «broyage colloïdal» sous = 300 $sec^{-1}$ exprimée en Pa·s | 0,26 | 0,25 | 1,0 | 0,58 | 0,85 | 0,47 | 0,31 | 0,35 | * | 0,48 | 0,25 |
| 6.3 Viscosité à la base, haut gradient = 0,5 - 2·$10^5$ $sec^{-1}$ exprimée en Pa·s | 0,88 | 0,9 | 1,0 | 1,0 | 1,0 | 0,82 | 0,90 | 1,70 | | 1,04 | 0,89 |

* pompabilité nulle     Mesures rhéologiques impossibles

### TABLEAU 3

Caractéristiques des produits

| ESSAIS | 12 | 13 | 14 | 15 | 16 | 17 | 18 | 19 | 20 | 21 |
|---|---|---|---|---|---|---|---|---|---|---|
| 1. Teneur en TPP | | | | | 93 | 93 | 94 | 93 | 93 | |
| 2. Densité apparente | | | | | 0,90 | 0,92 | 0,90 | 0,92 | 0,93 | |
| 3. Teneur en phase 1 | essai 1 (voir tableau 1) produit | essai 3 (voir tableau 1) produit | essai 4 (voir tableau 1) produit | essai 6 (voir tableau 1) produit | 70 | 70 | < 5 | 70 | 70 | |
| 4. Homogénéité de répartition de la phase 1 | | | | | oui | oui | oui | oui | oui | |
| 5. Granulométrie Ø moyen (Rosin Ramler Benett) µm | | | | | 60 | 115 | 100 | 130 | 100 | |
| % en masse, des particules > 630 µm | | | | | 0% | 0,5% | 0,5% | 8% | 0,5% | |
| % en masse, particules < 25 µm | | | | | 15% | 5% | 6% | 5% | 5% | |
| 6. Préhydratation par suspension aqueuse de TPP | | | | | oui | oui | non | non | non | |
| Quantité d'eau (% $H_2O$ par perte à 550°C) | | | | | 3,8 | 4,6 | 2,1 | 4,4 | 4,5 | |
| 7. Homogénéité de répartition des cristaux d'hexahydrate dans chaque population granulométrique | | | | | oui | non | non | non | non | |
| 8. Pureté (cations étrangers) $Ca^{++}$ ppm | | | | | 300 | 300 | 100 | 300 | 300 | |
| $mg^{++}$ ppm | | | | | 180 | 150 | 50 | 150 | 150 | |

### TABLEAU 4

Comportement en préparation formules liquides

| ESSAIS | 12 | 13 | 14 | 15 | 16 | 17 | 18 | 19 | 20 | 21 |
|---|---|---|---|---|---|---|---|---|---|---|
| 1. Ampérage consommé par l'agitateur pendant le mélange | | | | | | | | | | |
| à t = 10 mn | 0,25 | Prise en masse | Prise en masse | 0,25 | 0,75 | 0,75 | Prise en masse | 0,50 | 1,10 | 1,90 |
| à t = 20 mn | 0,25 | | | 0,25 | 0,80 | 1,05 | | 0,70 | 1,45 | 2,30 |
| 2. Aspect de la suspension | | | | | | | | | | |
| Fluide, sans grumeaux | × | — | — | × | × | × | | | | |
| Fluide, avec grumeaux | — | — | — | — | — | | | | | |
| Très épaisse | — | — | — | — | — | | | × | × | |
| Prise en masse | non | × | × | non | non | | × | | | |

**Revendications pour les Etats contractants:**
BE, CH, DE, FR, GB, IT, LI, LU, NI, SE

1. Tripolyphosphate de sodium à vitesse d'hydratation élevée, présentant les caractéristiques suivantes:
– une teneur en phase I d'au moins 50%;
– une répartition homogène de la phase I;
– une granulométrie telle que le diamètre moyen RRB (Rosin Ramler Benett) soit compris entre 130 et 250 µm et que les proportions maximales en masse de produit à particules de diamètres supérieurs à 630 µm et de diamètres inférieurs à 25 µm soient respectivement de 5% environ et de 20% environ;
– une teneur en eau comprises entre 0,4 et 4% en poids, cette eau étant essentiellement présente sous forme de cristaux de tripolyphosphate de sodium hexahydraté;
– une répartition homogène des cristaux précités dans chaque fraction granulométrique du produit.

2. Tripolyphosphate selon la revendication 1, caractérisé en ce que la teneur en phase I est d'au moins 70%.

3. Tripolyphosphate selon la revendication 1 ou 2, caractérisé en ce que la proportion maximale en masse pour les particules de diamètres supérieurs à 630 µm est de 2,5% environ et de 10% environ en masse pour les particules de diamètres inférieurs à 25 µm.

4. Tripolyphosphate selon l'une quelconque des revendications précédentes, caractérisé en ce qu'il présente une densité apparente d'au moins 0,8 et de préférence comprise entre 0,9 et 1,2.

5. Tripolyphosphate selon l'une quelconque des revendications précédentes, caractérisé en ce qu'il présente une teneur en tripolyphosphate vrai d'au moins 93%.

6. Procédé de préparation d'un tripolyphosphate de sodium selon l'une quelconque des revendications précédentes, caractérisé en ce qu'il comporte les étapes suivantes:
– on part d'un tripolyphosphate résultant d'une polycondensation unique et à température telle que l'on obtienne une teneur en phase I d'au moins 50%;
– on effectue un broyage primaire grossier de ce tripolyphosphate;
– on préhydrate ce tripolyphosphate broyé en y pulvérisant une suspension aqueuse de tripolyphosphate hexahydraté, de manière que la teneur en eau du tripolyphosphate préhydraté soit comprise entre environ 0,4 et environ 4%;
– on effectue un broyage secondaire du tripolyphosphate préhydraté de manière à obtenir une granulométrie telle que le diamètre moyen RRB soit compris entre 130 et 250 µm et que les proportions maximales de produit à particules de diamètres supérieurs à 630 µm et à particules de diamètres inférieurs à 25 µm soient respectivement de 5% environ et de 20% environ.

7. Procédé selon la revendication 6, caractérisé en ce qu'on pulverisé une quantité de suspension aqueuse de tripolyphosphate hexahydraté comprise entre 0,6 et 6% en poids par rapport au tripolyphosphate de sodium anhydre.

8. Procédé de préparation d'une composition détergente liquide, caractérisé en ce que dans une première étape, on mélange avec de l'eau un tripolyphosphate de sodium selon l'une des revendications 1 à 5 ou préparé selon les revendications 6 ou 7, de manière à obtenir une suspension comprenant du tripolyphosphate hexahydraté, puis en ce que, dans une deuxième étape, on ajoute à la suspension précitée une préparation concentrée d'ingrédients actifs.

9. Procédé selon la revendication 8, caractérisé en ce que le mélange du tripolyphosphate avec de l'eau se fait en présence d'un alcool ou d'un polyol.

**Revendications pour l'Etat contactant: AT**

1. Procédé de préparation d'un tripolyphosphate de sodium à vitesse d'hydratation élevée, présentant les caractéristiques suivantes:
– une teneur en phase I d'au moins 50%;
– une répartition homogène de la phase I;
– une granulométrie telle que le diamètre moyen RRB (Rosin Ramler Benett) soit compris entre 130 et 250 µm et que les proportions maximales en masse de produit à particules de diamètres supérieurs à 630 µm et de diamètres inférieurs à 25 µm soient respectivement de 5% environ et de 20% environ;
– une teneur en eau comprise entre 0,4 et 4% en poids, cette eau étant essentiellement présente sous forme de cristaux de tripolyphosphate de sodium hexahydraté;
– une répartition homogène des cristaux précités dans chaque fraction granulométrique du produit caractérisé en ce qu'il comporte les étapes suivantes:
– on part d'un tripolyphosphate résultant d'une polycondensation unique et à température telle que l'on obtienne une teneur en phase I d'au moins 50%;
– on effectue un broyage primaire grossier de ce tripolyphosphate;
– on préhydrate ce tripolyphosphate broyé en y pulvérisant une suspension aqueuse de tripolyphosphate hexahydraté, de manière que la teneur en eau du tripolyphosphate préhydraté soit comprise entre environ 0,4 et environ 4%;
– on effectue un broyage secondaire du tripolyphosphate préhydraté de manière à obtenir une granulométrie telle que le diamètre moyen RRB soit compris entre 130 et 250 µm et que les proportions maximales de produit à particules de diamètres supérieurs à 630 µm et à particules de diamètres inférieurs à 25 µm soient respectivement de 5% environ et de 20% environ.

2. Procédé de préparation d'un tripolyphosphate selon la revendication 1, caractérisé en ce que la teneur en phase I est d'au moins 70%.

3. Procédé de préparation d'un tripolyphosphate selon la revendication 1 ou 2, caractérisé en ce que la proportion maximale en masse pour les particules de diamètres supérieurs à 630 µm est de 2,5% environ et de 10% environ en masse pour les particules de diamètres inférieurs à 25 µm.

4. Procédé de préparation d'un tripolyphosphate selon l'une quelconque des revendications précédentes, caractérisé en ce qu'il présente une densité apparente d'au moins 0,8 et de préférence entre 0,9 et 1,2.

5. Procédé de préparation d'un tripolyphosphate selon l'une quelconque des revendications précédentes, caractérisé en ce qu'il présente une teneur en tripolyphosphate vrai d'au moins 93%.

6. Procédé selon la revendication 1, caractérisé en ce qu'on pulvérise une quantité de suspension aqueuse de tripolyphosphate hexahydraté comprise entre 0,6 et 6% en poids par rapport au tripolyphosphate de sodium anhydre.

7. Procédé de préparation d'une composition détergente liquide, caractérisé en ce que dans une première étape, on mélange avec de l'eau un tripolyphosphate de sodium obtenu selon l'une des revendications 1 à 6, de manière à obtenir une suspension comprenant du tripolyphosphate hexahydraté, puis en ce que, dans une deuxième étape, on ajoute à la suspension précitée une préparation concentrée d'ingrédients actifs.

8. Procédé selon la revendication 7, caractérisé en ce que le mélange du tripolyphosphate avec de l'eau se fait en présence d'un alcool ou d'un polyol.

**Patentansprüche für die Vertragsstaaten:**
BE, CH, DE, FR, GB, IT, LI, LU, NL, SE

1. Natriumtripolyphosphat mit erhöhter Hydratationsgeschwindigkeit, das die nachfolgenden Merkmale aufweist:
- einen Gehalt an Phase I von wenigstens 50%;
- eine homogene Verteilung der Phase I;
- eine solche Korngrösse, dass der mittlere Durchmesser RRB (Rosin Ramler Bennet) zwischen 130 und 250 μm liegt und die maximalen Anteile von Partikeln in der Masse des Produkts mit Durchmessern oberhalb von 630 μm und mit Durchmessern unterhalb von 25 μm jeweils ungefähr 5% und ungefähr 20% betragen;
- einen Wassergehalt zwischen 0,4 und 4 Gew.-%, wobei dieses Wasser im wesentlichen in Form von Kristallen von Natriumtripolyphosphathexahydrat vorliegt;
- einer homogenen Verteilung der vorgenannten Kristalle in jeder Kornfraktion des Produkts.

2. Tripolyphosphat nach Anspruch 1, dadurch gekennzeichnet, dass der Gehalt an Phase I wenigstens 70% beträgt.

3. Tripolyphosphat nach Anspruch 1 oder 2, dadurch gekennzeichnet, dass der maximale Anteil an Partikeln in der Masse mit Durchmessern oberhalb von 630 μm ungefähr 2,5% beträgt und an Partikeln in der Masse mit Durchmessern unterhalb von 25 μm ungefähr 10% beträgt.

4. Tripolyphosphat nach einem der vorhergehenden Ansprüche, dadurch gekennzeichnet, dass es eine relative Dichte von wenigstens 0,8 und vorzugsweise zwischen 0,9 und 1,2 aufweist.

5. Tripolyphosphat nach einem der vorhergehenden Ansprüche, dadurch gekennzeichnet, dass es einen Gehalt an echtem Tripolyphosphat von wenigstens 93% aufweist.

6. Verfahren zur Herstellung eines Natriumtripolyphosphats nach einem der vorhergehenden Ansprüche, dadurch gekennzeichnet, dass es die nachfolgenden Schritte umfasst:
- man geht aus von einem Tripolyphosphat erhalten in einer einzigen Polykondensation und bei einer solchen Temperatur, dass man einen Gehalt an Phase I von wenigstens 50% erhält;
- man nimmt ein ersten grobes Mahlen dieses Tripolyphosphats vor;
- man prehydratisiert dieses gemahlene Tripolyphosphat durch Aufsprühen einer wässrigen Suspension von Tripolyphosphathexahydrat, so dass der Wassergehalt des Tripolyphosphats zwischen ungefähr 0,4 und ungefähr 4% liegt;
- man führt ein zweites Mahlen des prehydratisierten Tripolyphosphats durch, derart, dass man eine solche Korngrösse erhält, dass der mittlere Durchmesser RRB zwischen ungefähr 130 und 250 μm beträgt und die maximalen Anteile des Produkts an Partikeln mit einem Durchmesser von mehr als 630 μm und an Partikeln mit einem Durchmesser von weniger als 25 μm jeweils ungefähr 5% und ungefähr 20% betragen.

7. Verfahren nach Anspruch 6, dadurch gekennzeichnet, dass man eine Menge an wässriger Suspension von Tripolyphosphathexahydrat zwischen 0,6 und 6 Gew.-% bezogen auf wasserfreies Natriumtripolyphosphat aufsprüht.

8. Verfahren zur Herstellung einer flüssigen Waschmittelzusammensetzung, dadurch gekennzeichnet, dass man in einem ersten Schritt ein Natriumtripolyphosphat gemäss einem der Ansprüche 1 bis 5 oder hergestellt nach den Ansprüchen 6 oder 7 mit Wasser mischt, so dass man eine Tripolyphosphathexahydrat enthaltende Suspension erhält und dass man dann in einem zweiten Schritt zu der vorgenannten Suspension ein konzentriertes Präparat von aktiven Inhaltsstoffen zugibt.

9. Verfahren nach Anspruch 8, dadurch gekennzeichnet, dass das Mischen des Tripolyphosphats mit Wasser in Gegenwart eines Alkohols oder eines Polyols erfolgt.


**Patentansprüche für den Verstragsstaat: AT**

1. Verfahren zur Herstellung eines Natriumtripolyphosphats mit erhöhter Hydratationsgeschwindigkeit, mit den nachfolgenden Merkmalen:
- einem Gehalt an Phase I von wenigstens 50%;
- einer homogenen Verteilung der Phase I;
- einer solchen Korngrösse, dass der mittlere Durchmesser RRB (Rosin Ramler Bennet) zwischen 130 und 250 μm liegt und die maximalen Anteile an Partikeln mit einem Durchmesser oberhalb von 630 μm und einem Durchmesser unterhalb von 5 μm jeweils ungefähr 5% und ungefähr 20% betragen;
- einem Wassergehalt zwischen 0,4 und 4 Gew.-%, wobei dieses Wasser im wesentlichen in Form von Kristallen des Natriumtripolyphosphathexahydrats vorliegt;
- einer homogenen Verteilung der vorgenannten Kristalle in jeder Kornfraktion des Produkts, dadurch gekennzeichnet, dass es die nachfolgenden Schritte umfasst:
- man geht aus von einem Tripolyphosphat erhalten in einer einzigen Polykondensation und bei einer solchen Temperatur, dass man einen Gehalt an Phase I von wenigstens 50% erhält;
- man führt ein erstes Grobmahlen dieses Tripolyphosphats durch;
- man prehydratisiert dieses gemahlene Tripolyphosphat durch Aufsprühen einer wässrigen Suspension von Tripolyphosphathexahydrat, so dass der Wassergehalt des Tripolyphosphats zwischen ungefähr 0,4 und ungefähr 4% beträgt;
- man führt ein zweites Mahlen des prehydratisierten Tripolyphosphats durch, so dass eine solche Korngrösse erhalten wird, bei der der mittlere Durchmesser RRB zwischen 130 und 250 μm beträgt und die maximalen Anteile des Produkts an Partikeln mit Durchmesser oberhalb von 630 μm und an Partikeln mit Durchmesser unterhalb von 25 μm jeweils ungefähr 5% und ungefähr 20% betragen.

2. Verfahren zur Herstellung eines Tripolyphosphats nach Anspruch 1, dadurch gekennzeichnet, dass der Gehalt an Phase I wenigstens 70% beträgt.

3. Verfahren zur Herstellung eines Tripolyphosphats nach Anspruch 1 oder 2, dadurch gekennzeichnet, dass der maximale Anteil an Partikeln mit Durchmessern oberhalb von 630 µm in der Masse ungefähr 2,5% und an Partikeln mit Durchmessern unterhalb von 25 µm in der Masse ungefähr 10% beträgt.

4. Verfahren zur Herstellung eines Tripolyphosphats nach einem der vorhergehenden Ansprüche, dadurch gekennzeichnet, dass es eine relative Dichte von wenigstens 0,8 und vorzugsweise zwischen 0,9 und 1,2 aufweist.

5. Verfahren zur Herstellung eines Tripolyphossphats nach einem der vorhergehenden Ansprüche, dadurch gekennzeichnet, dass es einen Gehalt an echtem Tripolyphosphat von wenigstens 93% aufweist.

6. Verfahren nach Anspruch 1, dadurch gekennzeichnet, dass man die Menge an wässriger Suspension von Tripolyphosphathexahydrat zwischen 0,6 und 6 Gew.-% bezogen auf wasserfreies Natriumtripolyphosphat aufsprüht.

7. Verfahren zur Herstellung einer flüssigen Waschmittelzusammensetzung, dadurch gekennzeichnet, dass man in einem ersten Schritt ein gemäss einem der Ansprüche 1 bis 6 erhaltenes Natriumtripolyphosphat in der Weise mit Wasser mischt, dass man eine Tripolyphosphathexahydrat enthaltende Suspension erhält und dass man dann in einem zweiten Schritt zu der vorgenannten Suspension ein konzentriertes Präparat von aktiven Inhaltsstoffen zugibt.

8. Verfahren nach Anspruch 7, dadurch gekennzeichnet, dass das Mischen von Tripolyphosphat mit Wasser in Gegenwart eines Alkohols oder eines Polyols erfolgt.

**Claims for the Contracting States:**
BE, CH, DE, FR, GB, IT, LI, LU, NL, SE

1. Sodium tripolyphosphate having a high rate of hydration, which has the following characteristics:
– a phase I content of at least 50%;
– a homogenous distribution of phase I;
– a particle size such that the mean RRB (Rosin-Rammler-Bennett) diameter is between 130 and 250 µm and that the maximum proportions by mass of the product having particles of diameters greater than 630 µm and of diameters less than 25 µm are approximately 5% and approximately 20% respectively;
– a water content of between 0.4 and 4% by weight, this water being essentially in the form of sodium tripolyphosphate hexahydrate crystals;
– a homogenous distribution of the abovementioned crystals in each particle size fraction of the product.

2. Tripolyphosphate according to claim 1, characterized in that the phase I content is at least 70%.

3. Tripolyphosphate according to claim 1 or 2, characterized in that the maximum proportion by mass for particles of diameters greater than 630 µm is approximately 2.5% and that for particles of diameters less than 25 µm is approximately 10%.

4. Tripolyphosphate according to any one of the preceding claims, characterized in that it has an apparent density of at least 0.8 and preferably of between 0.9 and 1.2.

5. Tripolyphosphate according to any one of the preceding claims, characterized in that it has a genuine tripolyphosphate content of at least 93%.

6. Process for the preparation of a sodium tripolyphosphate according to any one of the preceding claims, characterized in that it comprises the following stages;
– the process is performed starting with a tripolyphosphate resulting from a single polycondensation and at a temperature such that a phase I content of at least 50% is obtained;
– a coarse primary grinding of this tripolyphosphate is carried out;
– this ground tripolyphosphate is prehydrated by spraying thereto an aqueous suspension of the hexahydrated tripolyphosphate so that the water content of the tripolyphosphate is between approximately 0.4 and approximately 4%;
– a secondary grinding of the prehydrated tripolyphosphate is carried out so as to obtain a particle size such that the mean RRB diameter is between 130 and 250 µm and that the maximum proportion of the product having particles of diameters greater than 630 µm and having particles of diameters less than 25 µm are approximately 5% and approximately 20% respectively.

7. Process according to claim 6, characterized in that a quantity of an aqueous suspension of the hexahydrated tripolyphosphate of between 0.6 and 6% by weight relative to the anhydrous sodium tripolyphosphate is sprayed.

8. Process for the preparation of a liquid detergent composition, characterized in that in a first stage, a sodium tripolyphosphate according to one of claims 1 to 5 or prepared according to claims 6 or 7 is mixed with water so as to obtain a suspension containing hexahydrated tripolyphosphate and then, in that, in a second stage, a concentrated preparation of active ingredients is added to the abovementioned suspension.

9. Process according to claim 8, characterized in that the tripolyphosphate is mixed with water in the presence of an alcohol or a polyhydric alcohol.

**Claims for the Contracting State: AT**

1. Process for the preparation of a sodium tripolyphosphate having a high rate of hydration, which has the following characteristics:
– a phase I content of at least 50%;
– a homogenous distribution of phase I;
– a particle size such that the mean RRB (Rosin-Rammler-Bennett) diameter is between 130 and 250 µm and that the maximum proportions by mass of the product having particles of diameters greater than 630 µm and of diameters less than 25 µm are approximately 5% and approximately 20% respectively;

– a water content of between 0.4 and 4% by weight, this water being essentially in the form of sodium tripolyphosphate hexahydrate crystals;

– a homogenous distribution of the above mentioned crystals in each particle size fraction of the product, characterized in that it comprises the following stages;

– the process is performed starting with a tripolyphosphate resulting from a single polycondensation and at a temperature such that a phase I content of at least 50% is obtained;

– a coarse primary grinding of this tripolyphosphate is carried out;

– this ground tripolyphosphate is prehydrated by spraying thereto an aqueous suspension of hexahydrated tripolyphosphate so that the water content of the tripolyphosphate is between approximately 0.4 and approximately 4%;

– a secondary grinding of prehydrated tripolyphosphate is carried out so as to obtain a particle size such that the mean RRB diameter is between 130 and 250 μm and that the maximum proportions of the product having particles of diameters greater than 630 μm and having particles of diameters less than 25 μm are approximately 5% and approximately 20% respectively.

2. Process for the preparation of a tripolyphosphate according to claim 1, characterized in that the phase I content is at least 70%.

3. Process for the preparation of a tripolyphosphate according to claim 1 or 2, characterized in that the maximum proportion by mass of the particles of diameters greater than 630 μm is approximately 2.5% and that for particles of diameters less than 25 μm is approximately 10%.

4. Process for the preparation of a tripolyphosphate according to any one of the preceding claims, characterized in that it has an apparent density of at least 0.8 and preferably of between 0.9 and 1.2.

5. Process for the preparation of a tripolyphosphate according to any one of the preceding claims, characterized in that it has a genuine tripolyphosphate content of at least 93%.

6. Process according to claim 1, characterized in that a quantity of an aqueous suspension of hexahydrated tripolyphosphate of between 0.6 an 6% by weight relative to the anhydrous sodium tripolyphosphate is sprayed.

7. Process for the preparation of a liquid detergent composition, characterized in that in a first stage, a sodium tripolyphosphate obtained according to one of claims 1 to 6 is mixed with with water so as to obtain a suspension containing hexahydrated tripolyphosphate, and then, in that, in a second stage, a concentrated preparation of active ingredients is added to the abovementioned suspension.

8. Process according to claim 7, characterized in that the tripolyphosphate is mixed with water in the presence of an alcohol or a polyhydric alcohol.